# EUROPEAN PATENT SPECIFICATION

(11) **EP 1 149 651 B1**
(45) Date of publication and mention of the grant of the patent: **27.07.2005**
(21) Application number: 00109002.6
(22) Date of filing: 26.04.2000
(51) Int. Cl.: B23D 53/04, B23D 55/08

(54) **Device for reducing the lowering speed of the suspended arm of a band-sawing machine**
Vorrichtung zum Reduzieren der Absenkgeschwindigkeit des Lenkers einer Bandsägemaschine
Dispositif de réduction de vitesse d'abaissement du bras suspendu d'une machine à scier à ruban

(43) Date of publication of application: 31.10.2001
(73) Proprietor: Lin, Kuo-Chuan, Taichung (TW)
(72) Inventor: Lee, Chen-Chu, Taichung (TW)
(74) Representative: Casalonga, Axel

(56) References cited:
- US-A- 4 364 294

## Description

### Background of the Invention

The present invention relates to a band-sawing machine.

A typical band-sawing machine generally includes a suspended arm mounted above a frame. The suspended arm is substantially arch-like and includes an endless saw blade for sawing a metal workpiece by turning on a motor that actuates the saw blade to move. A vice is mounted behind the suspended arm for securely holding the workpiece to be sawn. The suspended arm is moved along an axis and pivoted downward toward the frame about a pivotal point during sawing. Nevertheless, the downward speed of the suspended arm for sawing the workpiece cannot be controlled precisely. For example, the sawing speed of the saw blade should be higher when sawing a solid rod or a tube having a thick wall.

US-A-4 364 294, on which the preamble of claim 1 is based, discloses a band-sawing machine wherein a reduction device is mounted between the frame and the suspended arm, the reduction device including a first end pivotally connected to the suspended arm and a second end fixed to the frame, the reduction device reducing a lowering speed of the suspended arm for sawing. For the control of the falling speed an oil cylinder or air pressure device is used. For adjusting the feed rate of the saw by the downward movement of the suspended arm an adjustable spring interconnects the frame and the suspended arm counteracting the weight thereof.

### Summary of the Invention

It is the primary object of the present invention to provide a band-sawing machine, wherein the sawing speed for the saw blade can be adjusted in a wider range.

A band-sawing machine in accordance with the present invention includes a frame, a suspended arm having an end pivoted to the frame, a hydraulic cylinder for actuating the suspended arm, and a reduction device having an elastic member for reducing the lowering speed of the suspended arm. As claimed, a securing means is provided for enabling/disabling the reduction device, wherein in the disabled mode the first end of the elastic member is not fixedly connected and in the enabled mode it is fixedly connected in secure engagement by the securing means, and means are provided for enabling/disabling the hydraulic cylinder.

In a first operation mode, the hydraulic cylinder is disabled and the reduction device is enabled to reduce the lowering speed of the suspended arm during sawing.

In a second operation mode, the hydraulic cylinder is enabled and the reduction device is disabled to operate the band-sawing machine as a conventional one.

In a third operation mode, both of the hydraulic cylinder and the reduction device are enabled.

Thus, the user may optionally enable/disable the hydraulic cylinder and the reduction device for sawing workpieces of different thicknesses. Other objects, advantages, and novel features of the invention will become more apparent from the following detailed description when taken in conjunction with the accompanying drawings.

### Brief Description of the Drawings

Fig. 1 is an exploded perspective view of a band-sawing machine in accordance with the present invention.
Fig. 2 is a schematic top view of a reduction device of the band-sawing machine in accordance with the present invention, wherein the reduction device is in an inoperative status.
Fig. 3 is a view similar to Fig. 2, wherein the reduction device is an operative status.
Fig. 4 is a sectional view of the reduction device and a securing means, wherein the securing means is manually pivotable.
Fig. 5 is a view similar to Fig. 4, wherein the securing means is retained in place.
Fig. 6 is a schematic side view of the band-sawing machine, wherein a hydraulic cylinder is disabled and the reduction device is enabled to reduce the lowering speed of the saw blade.
Fig. 6A is an enlarged view, partly sectioned, of a circle A in Fig. 6.
Fig. 7 is a view similar to Fig. 6, wherein the hydraulic cylinder is disabled and the reduction device is enabled, and the suspended arm is lowered to a frame table.
Fig. 7A is an enlarged view, partly sectioned, of a circle A in Fig. 7.
Fig. 8 is a view similar to Fig. 7, wherein the reduction device is disabled and the hydraulic cylinder is enabled, and the suspended arm is lowered to the frame for operation by a hydraulic cylinder.
Fig. 8A is an enlarged view, partly sectioned, of a circle A in Fig. 8.
Fig. 9 is a view similar to Fig. 6, wherein the hydraulic cylinder and the reduction device are both enabled to lower the suspended arm to the frame table.

### Detailed Description of the Preferred Embodiment

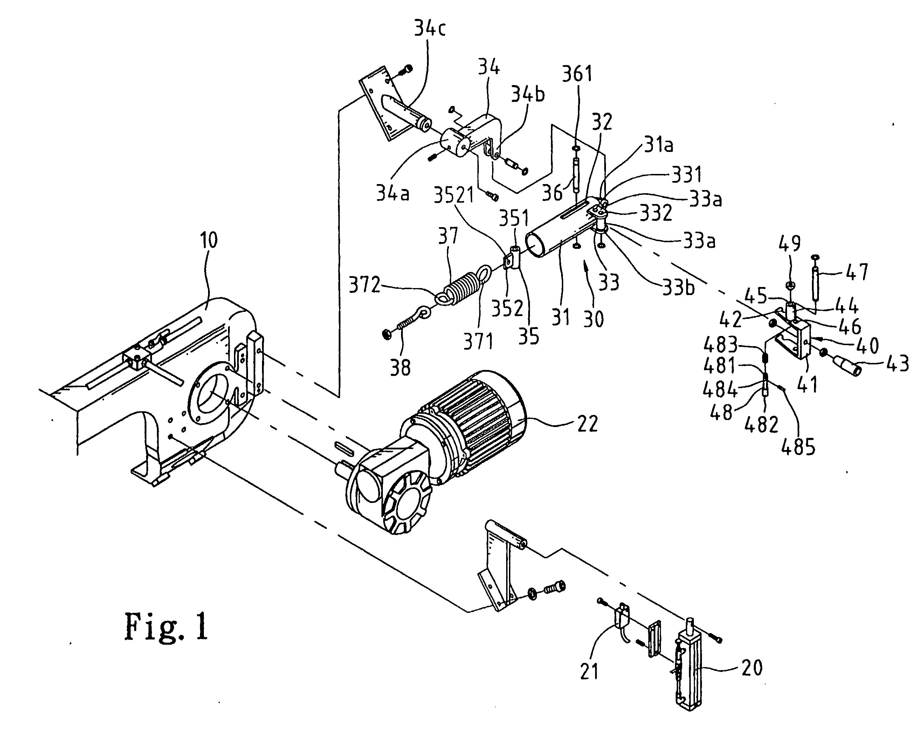

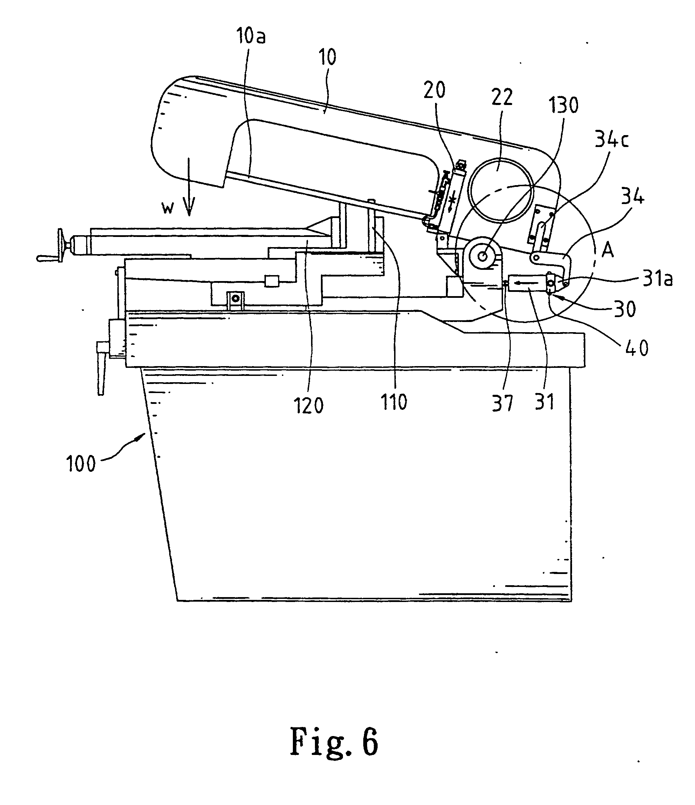

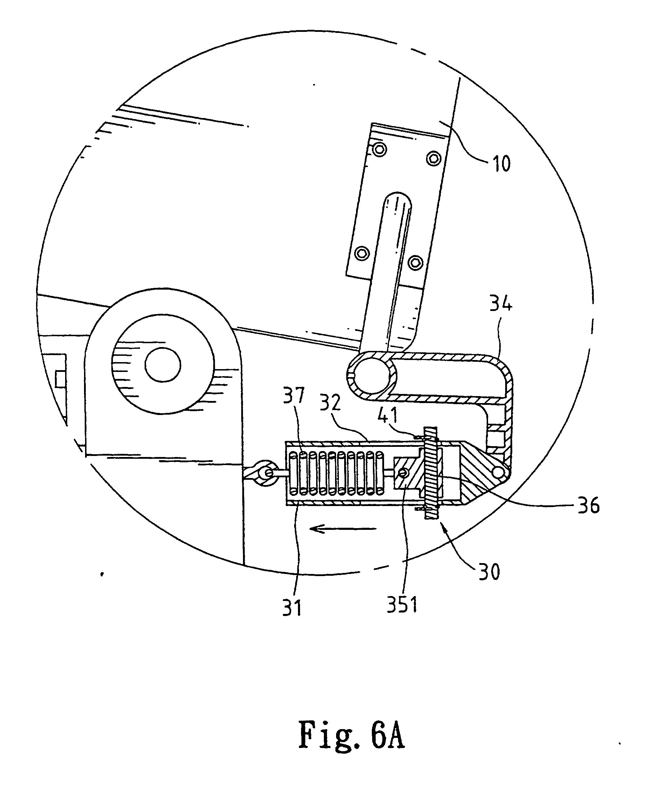

Referring to Fig. 6, a band-sawing machine in accordance with the present invention generally includes a frame 100, a suspended arm 10, and a reduction device 30. As illustrated in Figs. 1 and 6, a hydraulic cylinder 20 is mounted to a side of the suspended arm 10 and includes a microswitch 21 (Fig. 1) for controlling flow of the working fluid in the hydraulic cylinder 20. Under actuation of the hydraulic cylinder 20, the suspended arm 10 is moved along a longitudinal axis of the hydraulic cylinder 20 to a level for sawing. An endless saw blade 10a is mounted in the suspended arm 10 and actuatable by a motor 22 for sawing a workpiece 110 that is held in place by a clamping device 120, which, in turn, is mounted to the frame 100. During sawing, the hydraulic cylinder 20 lowers the suspended arm 10 at a certain speed. In addition, the suspended arm 10 pivots downward toward the frame about a pivotal axis 130 during sawing.

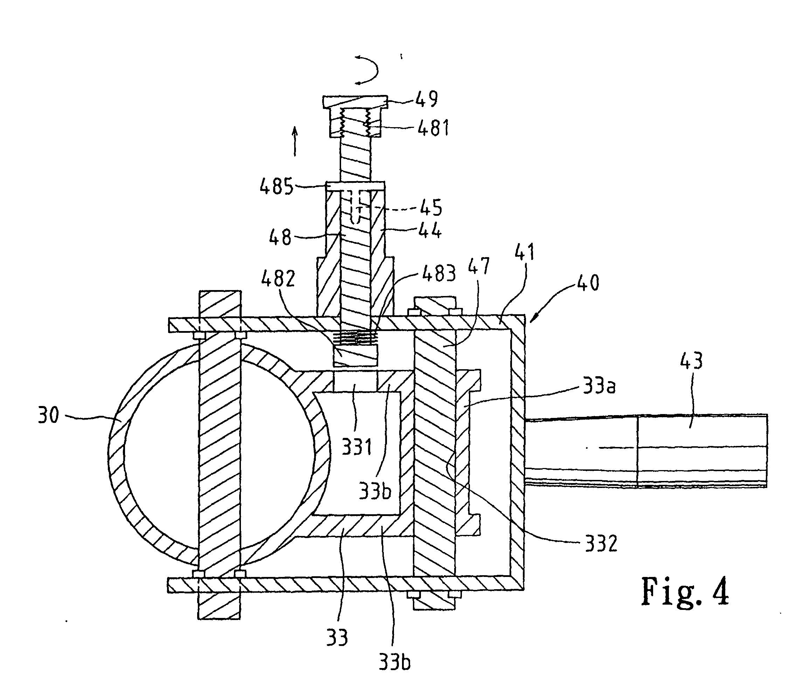

Referring to Figs. 1 and 6, reduction device 30 is provided to reduce the lowering speed of the suspended arm 10 as well as the saw blade 10a during sawing. The reduction device 30 includes a sleeve 31 having aligned longitudinal guide slots 32 in a peripheral wall thereof. A pivotal section 33 is mounted to a side of the sleeve 31. In this embodiment, the pivotal section 33 includes two spaced plates 33b extended laterally outward from the sleeve 31 and a tube 33a connected between the spaced plates 33b. As illustrated in Fig. 4, the upper plate 33b has a hole 331 defined therein and the tube 33a has a hole 332 therein. A pivotal elbow 34 includes a first end 34a pivotally connected to a connecting member 34c that is fixed to the suspended arm 10 and a second end 34b pivotally connected to an end 31a of the sleeve 31.

Mounted in the sleeve 31 is an engaging member 35 that includes a guide tube 351 and an engaging piece 352 extending outward from an outer periphery of the guide tube 351 and having a hole 3521. A sliding pin 36 is extended through and slidable along the aligned guide slots 32 in the sleeve 31. The sliding pin 36 is also extended through the guide tube 351 of the engaging member 35, and C-clips 361 are attached to upper and lower ends of the sliding pin 36 to prevent disengagement of the sliding pin 36 from the engaging member 35. Thus, the engaging member 35 and the sliding pin 36 together slide along the guide slots 361.

An elastic member 37 includes a first hooked end 371 attached to the hole 3521 of the engaging piece 352 of the engaging member 35 and a second hooked end 372 that is attached to a hook 38 which has an end screwed to a side of the frame 100. Thus, a reduction device 30 is constructed in which the elastic member 37 is compressed or tensioned between the suspended arm 10 and the frame 100.

A securing means 40 is mounted to the pivotal section 33 of the sleeve 31 and includes a substantially U-shape catch 41 having two limbs (not labeled) located on two sides of the pivotal section 33 and a mediate section interconnecting the limbs. A notch 42 is defined in a distal end of each limb. A handle 43 is attached to the mediate section of the U-shape catch 41 for manual operation. The catch 41 further includes a tube 44 extending from a limb thereof and having diametrically aligned slots 45 in a periphery thereof. Aligned pivotal holes 46 are defined in the limbs of the catch 41, and a pivotal pin 47 is extended through the pivotal holes 46 and the hole 332 of the tube 33a of the pivotal section 33, thereby allowing the catch 41 to pivot relative to the pivotal section 33 of the sleeve 31.

An engaging rod 48 includes a threaded first end 481 and an enlarged second end 482. A spring 483 is mounted around an intermediate portion of the engaging rod 48. The intermediate portion of the engaging rod 48 includes a transverse pinhole 484. As illustrated in Fig. 4, the engaging rod 48 is extended through the tube 44 on the catch 41 via an interior space of the catch 41. A cap 49 is threadedly engaged with the threaded first end of the engaging rod 48 to move therewith. A transverse pin 484 is extended through the pinhole 484 of the engaging rod 48 with two ends of the pin 484 beyond the pinhole 484.

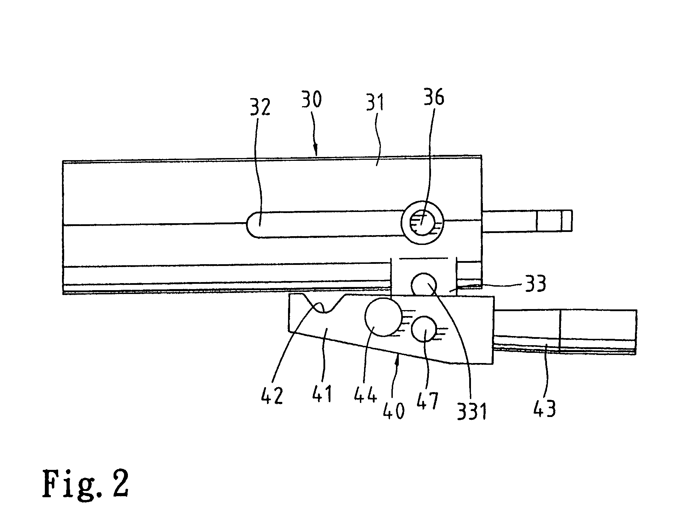

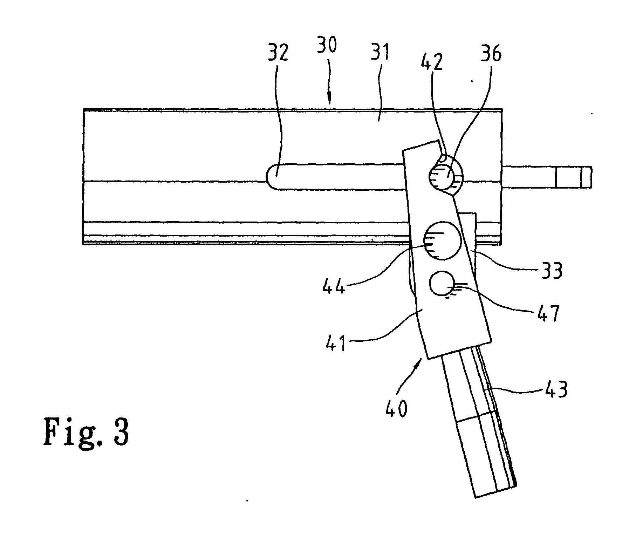

Referring to Fig. 2, the reduction device 30 is in an inoperative status, as the sliding pin 36 is freely slidable along the guide slots 32. The user may pivot by the handle 43 and thus move the securing means 40 to a position shown in Fig. 3, wherein the sliding pin 36 is engaged in the notches 42 of the catch 41. Thus, via connection provided by the securing means 40, the end 31 a of the sleeve 31, the pivotal elbow 34, and the connecting member 34c, the first hooked end 371 of the elastic member 37 is connected to the suspended arm 10 to move therewith. Accordingly, during sawing, the elastic member 37 acts as a buffering member to slow down the lowering speed of the saw blade 10a carried by the suspended arm 10.

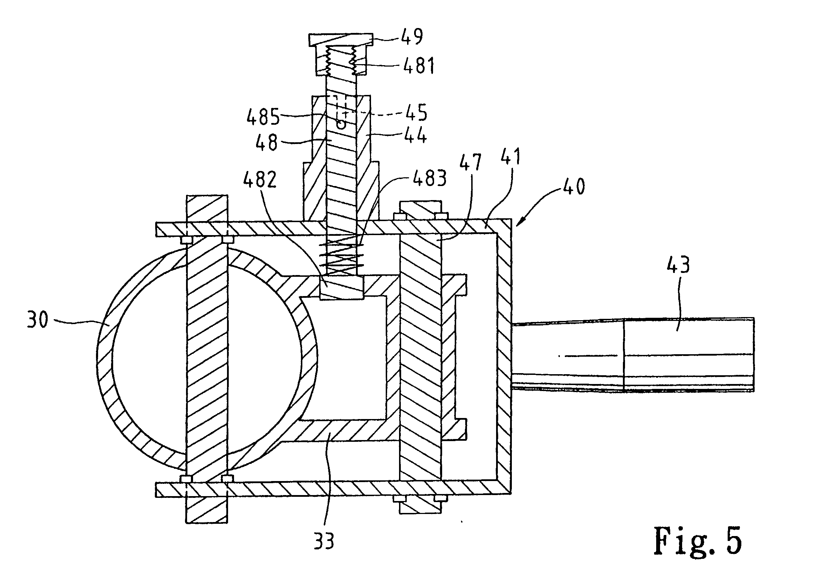

Referring to Fig. 4, when the pin 485 extended through the pinhole 484 of the engaging rod 48 is in a status resting on an upper end face of the tube 44 on the catch 41, the catch 41 of the securing means 40 is freely pivotable between a position shown in Fig. 2 and another position shown in Fig. 3. When the cap 49 is lifted and then turned through 90°, the pin 485 is aligned with the slots 45 in the tube 46. Thus, the engaging rod 48 falls to a position shown in Fig. 5 when the cap 49 is released. The enlarged second end 483 of the engaging rod 48 is engaged in the hole 331 of the pivotal section 33 on the sleeve 31, thereby preventing pivotal movement of the securing means 40 relative to the pivotal section 33. Thus, the securing means 40 is retained in either the position shown in Fig. 2 in which the reduction device 30 is in an inoperative status or the position shown in Fig. 3 in which the reduction device 30 is in an operative status.

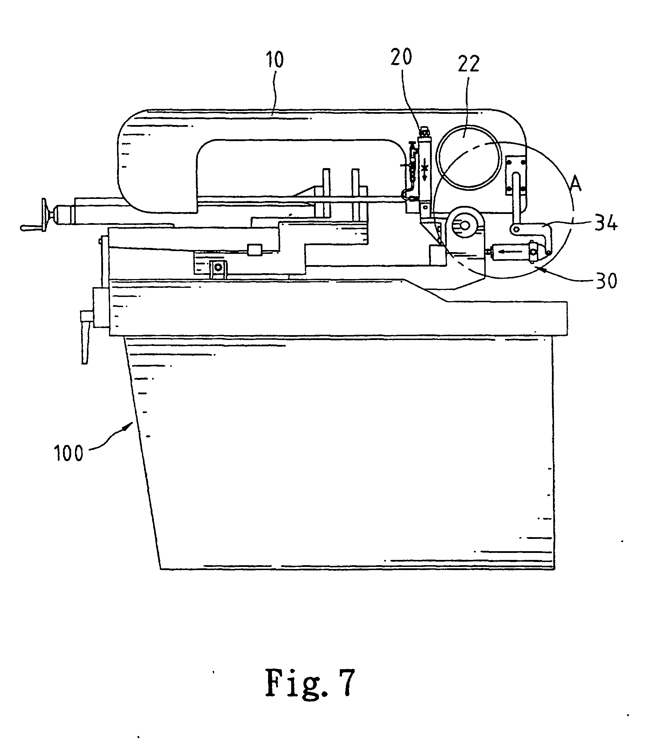

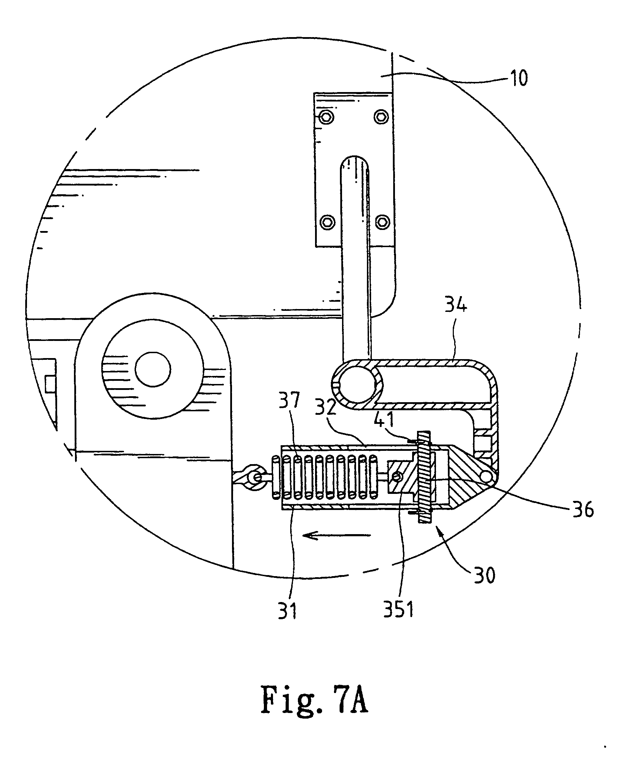

Referring to Figs. 6 and 6A, during the sawing procedure, the hydraulic cylinder 20 is disabled and the reduction device 30 is enabled (see Fig. 3). The suspended arm 10 pivots downward toward the frame 10 about the pivotal axis 130 during sawing, and the elastic member 37 acts as a buffering member to slow down the lowering speed of the saw blade 10a carried by the suspended arm 10 until the suspended arm 10 is lowered to the frame table (not labeled, see Figs. 7 and 7A).

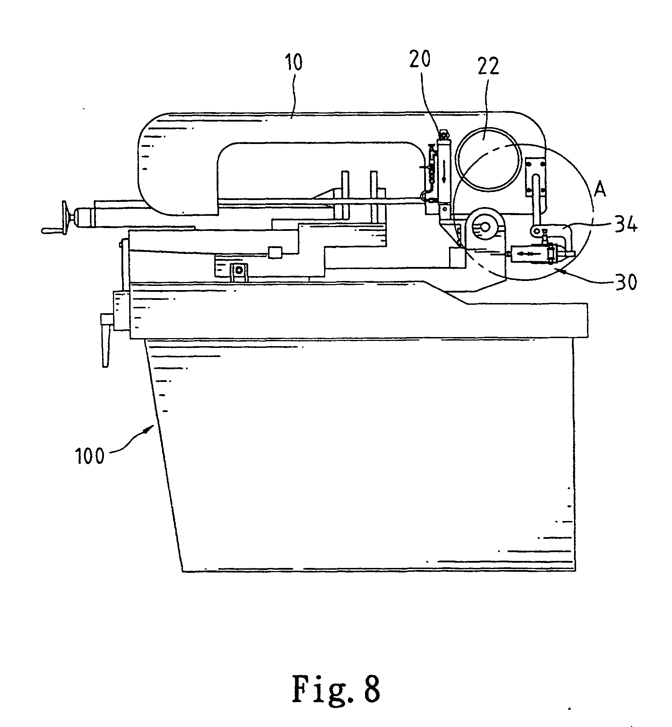

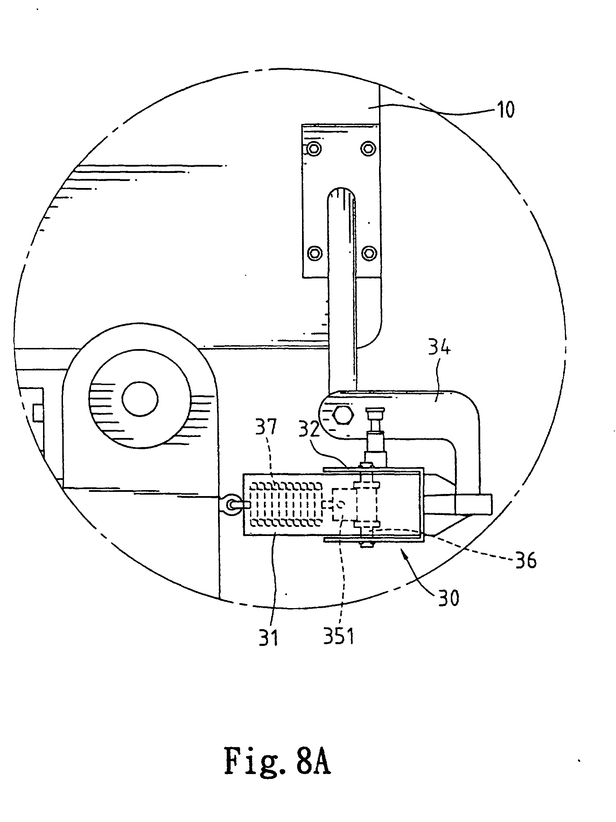

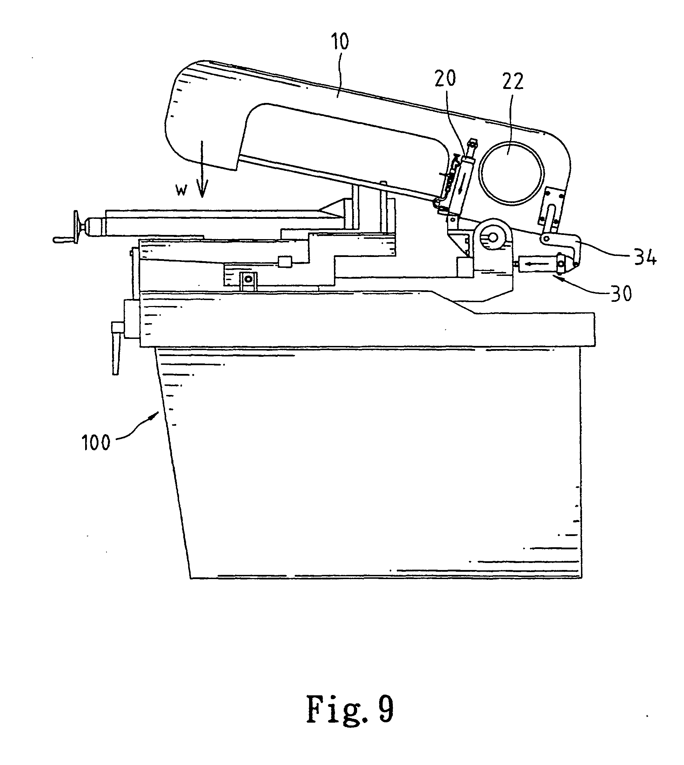

Of course, the reduction device 30 can be disabled and the hydraulic cylinder 20 is enabled to actuate the suspended arm 10 like a conventional band-sawing machine, as shown in Fig. 8 and Fig. 8A. In addition, both of the hydraulic cylinder and the reduction device can be enabled, wherein the hydraulic cylinder actuates the suspended arm 10 downward and the reduction device 30 slows down the lowering speed of the suspended arm 10 during sawing, as shown in Fig. 9.

Thus, the user may optionally enable/disable the hydraulic cylinder 20 and the reduction device 30 for sawing workpieces of different thicknesses.

Although the invention has been explained in relation to its preferred embodiment, it is to be understood that many other possible modifications and variations can be made without departing from the scope of the invention as hereinafter claimed.

## Claims

1. A band-sawing machine comprising a frame (100) for holding a workpiece and a suspended arm (10) having an end (130) pivotally connected to the frame (100), wherein
a hydraulic cylinder (20) is provided for pivoting the suspended arm (10),
a reduction device (30) for reducing the lowering speed of the suspended arm for sawing is mounted between the frame and the suspended arm, the reduction device includes a first end pivotally connected to the suspended arm (10) and a second end fixed to the frame (100) and the reduction device comprises an elastic member (37) which is compressed or tensioned between the suspended arum (10) and the frame (100),
**characterised in that**
a securing means (40) is provided for enabling/disabling the reduction device, wherein in the disabled mode the first end of the elastic member (37) is not fixedly connected and in the enabled mode it is fixedly connected in secure engagement by the securing means (40), and
means are provided for enabling/disabling the hydraulic cylinder (20),
wherein the suspended arm (10) can be actuated in a first operative mode with the hydraulic cylinder (20) being disabled and the reduction device (30) being enabled and acting as a buffering member to slow down the lowering speed of the suspended arm (10), or in a second operation mode with the hydraulic cylinder (20) being enabled and the reduction device (30) being disabled so that the suspended arm only is actuated by the hydraulic cylinder (20) without reduction of the lowering speed, or in a third operation mode with the hydraulic cylinder (20) and the reduction device (30) being enabled so that the hydraulic cylinder (20 actuates the suspended arm (10) downward and the reduction device (30) slows down its lowering speed.

2. The band-sawing machine as claimed in claim 1, wherein the reduction device (30) includes:
a sleeve (31) having aligned longitudinal guide slots (32) defined in a peripheral wall thereof, a pivotal section (33) being formed on an outer periphery of the sleeve (31),
an engaging member (35) slidably received in the sleeve (31),
an elastic member (37) having a first end (371) attached to the engaging member (35) to move therewith and a second end (372) secured to the frame (100),
a pin (361) extended through the guide slots (32) and the engaging member (35) such that the pin (361) and the engaging member (35) slide together, and
a pivotal elbow (34) including a first end (34a) pivotally connected to a connecting member (34c) that is fixed to the suspended arm (10) and a second end (34b) pivotally connected to an end (31a) of the sleeve (31),
the securing means (40) being pivotally mounted to the pivotal section (33) of the sleeve (31) and includes means (41) for securely engaging with the pin (36).

3. The band-sawing machine as claimed in claim 2, wherein the pivotal section (33) of the sleeve (31) includes two spaced plates (33b) having a tube (33a) connected therebetween, one of the plates (33b) includes a hole (331), and wherein the securing means (40) includes:
a U-shape catch (41) having two limbs located on both sides of the pivotal section (33) and a mediate section interconnecting the limbs, a notch (42) being defined in each said limb for engaging with the pin (36),
a second pin (47) extended through the limbs of the catch (41) and the tube (33a) of the pivotal section (33), thereby allowing pivotal movement of the catch (41) relative to the pivotal section (33), and
a handle (43) attached to the catch (41) for manual operation to engage/disengage the notches (42) with/from the pin (361).

4. The band-sawing machine as claimed in claim 3, wherein one of the limbs of the catch (41) includes a second tube (44) securely mounted thereon, the second tube (44) includes diametrically disposed slots (45) in a periphery thereof, an engaging rod (48) includes a first end (481) and a second end (482), the engaging rod (48) is extended through said one of the limbs of the catch (41) with the first end (481) beyond the catch (41) for manual operation and with the second end (482) between the limbs of the catch (41), a transverse pin (485) is extended through the engaging rod (48), whereby when the transverse pin (485) rests on an end face of the second tube (44), the second end (482) of the engaging rod (48) is disengaged from the hole (331) of the pivotal section (33), thereby allowing the catch (41) to be pivotable relative to the pivotal section (33), and when the transverse pin (485) is engaged in the slots (45) of the second tube (44), the second end (482) of the engaging rod (48) is engaged in the hole (331) of the pivotal section thereby preventing pivotal movement of the catch (41) relative to the pivotal section (33).

5. The band-sawing machine as claimed in claim 4, wherein a spring (483) is attached between said one of the limbs of the catch (41) and the second end (482) of the engaging rod (48) for biasing the second end (482) of the engaging rod to engage with the hole (331) of the pivotal section (33).

## Patentansprüche

1. Bandsägemaschine, umfassend einen Rahmen (100) zum Halten eines Werkstücks und einen Hängearm (10), dessen Ende (130) schwenkbar mit dem Rahmen (100) verbunden ist, wobei
ein Hydraulikzylinder (20) zum Verschwenken des Hängearms (10) vorgesehen ist,
eine Reduktionseinrichtung (30) zum Reduzieren der Absenkgeschwindigkeit des Hängearms zum Sägen zwischen dem Rahmen und dem Hängearm angebracht ist, die Reduktionseinrichtung ein schwenkbar mit dem Hängearm (10) verbundenes erstes Ende und ein am Rahmen (100) befestigtes zweites Ende enthält und die Reduktionseinrichtung ein elastisches Element (37) umfaßt, das zwischen dem Hängearm (10) und dem Rahmen (100) zusammengedrückt oder unter Zugspannung gesetzt wird,
**dadurch gekennzeichnet, daß**
ein Festhaltemittel (40) vorgesehen ist, um die Reduktionseinrichtung freizugeben/zu sperren, wobei das erste Ende des elastischen Elements (37) in der Sperrbetriebsart nicht fest verbunden ist und es in der Freigabebetriebsart in sicherem Eingriff durch das Festhaltemittel (40) fest verbunden ist, und
Mittel vorgesehen sind, um den Hydraulikzylinder (20) freizugeben/zu sperren,
wobei der Hängearm in einer ersten Betriebsart mit gesperrtem Hydraulikzylinder (20) und mit freigegebener und als Dämpfungselement zur Verlangsamung der Absenkgeschwindigkeit des Hängearms (10) wirkender Reduktionseinrichtung (30) oder in einer zweiten Betriebsart mit freigegebenem Hydraulikzylinder (20) und gesperrter Reduktionseinrichtung (30) so, daß der Hängearm lediglich durch den Hydraulikzylinder (20) ohne Reduktion der Absenkgeschwindigkeit oder in einer dritten Betriebsart mit freigegebenem Hydraulikzylinder (20) und freigegebener Reduktionseinrichtung (30) so, daß der Hydraulikzylinder (20) den Hängearm (10) abwärts betätigt und die Reduktionseinrichtung (30) seine Absenkgeschwindigkeit verlangsamt, betätigt werden kann.

2. Bandsägemaschine nach Anspruch 1, bei der die Reduktionseinrichtung (30) enthält:
eine Hülse (31), die in einer Umfangswand ausgerichtete Längsführungsschlitze (32) aufweist, wobei ein Schwenkabschnitt (33) an einem Außenumfang der Hülse (31) gebildet ist,
ein verschiebbar in der Hülse (31) aufgenommenes Ein-griffselement (35),
ein elastisches Element (37), von dem ein erstes Ende (371) am Eingriffselement (35) zur Mitbewegung mit diesem befestigt ist und ein zweites Ende (372) am Rahmen (100) angebracht ist,
einen Stift (361), der sich durch die Führungsschlitze (32) und das Eingriffselement (35) erstreckt derart, daß sich der Stift (361) und das Eingriffselement (35) zusammen verschieben, und
ein Schwenkwinkelstück (34), enthaltend ein erstes Ende (34a), das schwenkbar mit einem Verbindungselement (34c) verbunden ist, welches am Hängearm (10) befestigt ist, und ein zweites Ende (34b), das verschwenkbar mit einem Ende (31a) der Hülse (31) verbunden ist,
wobei das Festhaltemittel (40) schwenkbar am Schwenkabschnitt (33) der Hülse (31) angebracht ist und Mittel (41) zum sicheren In-Eingriff-Treten mit dem Stift (36) enthält.

3. Bandsägemaschine nach Anspruch 2, bei der der Schwenkabschnitt (33) der Hülse (31) zwei beabstandet angeordnete Platten (33b) mit einem dazwischen verbundenen Rohr (33a) enthält, eine der Platten (33b) ein Loch (331) enthält und wobei das Festhaltemittel (40) enthält:
eine U-förmige Sperrvorrichtung (41) mit zwei sich an beiden Seiten des Schwenkabschnitts (33) befindenden Gliedern und einem die Glieder miteinander verbindenden Mittenabschnitt, wobei in jedem Glied ein Einschnitt (42) für einen Eingriff mit dem Stift (36) vorgesehen ist,
einen zweiten Stift (47), der sich durch die Glieder der Sperrvorrichtung (41) und das Rohr (33a) des Schwenkabschnitts (33) erstreckt, wodurch eine Schwenkbewegung der Sperreinrichtung (41) in bezug auf den Schwenkabschnitt (33) gestattet ist, und
einen Handgriff (43), der an der Sperreinrichtung (41) zur manuellen Betätigung zum Einrücken/Freigeben der Einschnitte (42) mit/von dem Stift (361) befestigt ist.

4. Bandsägemaschine nach Anspruch 3, bei der eines der Glieder der Sperreinrichtung (41) ein fest daran angebrachtes zweites Rohr (44) enthält, das zweite Rohr (44) im Umfang diametral vorgesehene Schlitze (45) enthält, eine Eingriffstange (48) ein erstes Ende (481) und ein zweites Ende (482) enthält, sich die Eingriffstange (48) durch besagtes eines der Glieder der Sperreinrichtung (41) erstreckt, mit dem ersten Ende (481) jenseits der Sperreinrichtung (41) für eine manuelle Betätigung und mit dem zweiten Ende (482) zwischen den Gliedern der Sperreinrichtung (41), ein Querstift (485) sich durch die Eingriffstange (48) erstreckt, wodurch, wenn der Querstift (485) auf einer Endfläche des zweiten Schlauchs (44) ruht, das zweite Ende (482) der Eingriffstange (48) aus dem Loch (331) des Schwenkabschnitts (33) außer Eingriff gebracht wird, wodurch es ermöglicht ist, daß die Sperreinrichtung (41) in bezug auf den Schwenkabschnitt (33) verschwenkbar ist, und, wenn sich der Querstift (485) in Eingriff in den Schlitzen (45) des zweiten Schlauchs (44) befindet, sich das zweite Ende (482) der Eingriffstange (48) in Eingriff im Loch (331) des Schwenkabschnitts (33) befindet, wodurch eine Schwenkbewegung der Sperreinrichtung (41) in bezug auf den Schwenkabschnitt (33) verhindert wird.

5. Bandsägemaschine nach Anspruch 4, bei der eine Feder (483) zwischen dem einen der Glieder der Sperreinrichtung (41) und dem zweiten Ende (482) der Eingriffstange (48) zum Vorspannen des zweiten Endes (482) der Eingriffstange befestigt ist, um mit dem Loch (331) des Schwenkabschnitts (33) in Eingriff zu treten.

## Revendications

1. Machine à scie à ruban comprenant un bâti (100) pour tenir une pièce et un bras suspendu (10) ayant une extrémité (130) connectée à pivotement au bâti (100), dans laquelle :
un vérin hydraulique (20) est prévu pour faire pivoter le bras suspendu (10),
un dispositif de réduction (30) pour réduire la vitesse d'abaissement du bras suspendu pour scier est monté entre le bâti et le bras suspendu, le dispositif de réduction comportant une première extrémité connectée à pivotement au bras suspendu (10) et une deuxième extrémité fixée au bâti (100) et le dispositif de réduction comprenant un élément élastique (37) qui est comprimé ou étiré entre le bras suspendu (10) et le bâti (100),
**caractérisée en ce que** :
un moyen de fixation (40) est prévu pour activer/désactiver le dispositif de réduction, où, dans le mode désactivé, la première extrémité de l'élément élastique (37) n'est pas connectée fixement et, dans le mode activé, elle est connectée fixement en prise ferme par le moyen de fixation (40), et
un moyen est prévu pour activer/désactiver le vérin hydraulique (20),
et où le bras suspendu (10) peut être actionné dans un premier mode opératoire avec le vérin hydraulique (20) désactivé et le dispositif de réduction (30) activé et agissant comme élément tampon pour ralentir la vitesse d'abaissement du bras suspendu (10), ou dans un deuxième mode opératoire avec le vérin hydraulique (20) activé et le dispositif de réduction (30) désactivé, de sorte que le bras suspendu n'est actionné que par le vérin hydraulique (20) sans réduction de la vitesse d'abaissement, ou dans un troisième mode opératoire avec le vérin hydraulique (20) et le dispositif de réduction (30) activés, de sorte que le vérin hydraulique (20) actionne le bras suspendu (10) vers le bas et que le dispositif de réduction (30) ralentit sa vitesse d'abaissement.

2. Machine à scie à ruban selon la revendication 1, dans laquelle le dispositif de réduction (30) comprend :
un manchon (31) comportant des fentes de guidage longitudinales alignées (32) définies dans une paroi périphérique de celui-ci, une section pivot (33) étant formée sur une périphérie extérieure du manchon (31),
un élément de mise en prise (35) reçu à glissement dans le manchon (31),
un élément élastique (37) ayant une première extrémité (371) fixée à l'élément de mise en prise (35) pour se déplacer avec celui-ci et une deuxième extrémité (372) fixée au bâti (100),
un axe (361) passant dans les fentes de guidage (32) et dans l'élément de mise en prise (35) de telle manière que l'axe (361) et l'élément de mise en prise (35) glissent ensemble, et
un coude pivotant (34) comprenant une première extrémité (34a) connectée à pivotement à un élément de connexion (34c) qui est fixé au bras suspendu (10) et une deuxième extrémité (34b) connectée à pivotement à une extrémité (31a) du manchon (31),
le moyen de fixation (40) étant monté à pivotement sur la section pivot (33) du manchon (31) et comporte un moyen (41) destiné à se mettre en prise solidement avec l'axe (36).

3. Machine à scie à ruban selon la revendication 2, dans laquelle la section pivot (33) du manchon (31) comporte deux plaques espacées (33b) avec un tube (33a) connecté entre elles, l'une des plaques (33b) comportant un trou (331), et dans laquelle le moyen de fixation (40) comprend :
une attache en U (41) ayant deux branches situées de chaque côté de la section pivot (33) et une section médiane reliant les branches, une encoche (42) étant définie dans chacune desdites branches pour se mettre en prise avec l'axe (36),
un deuxième axe (47) passant dans les branches de l'attache (41) et dans le tube (33a) de la section pivot (33), permettant ainsi le mouvement pivotant de l'attache (41) par rapport à la section pivot (33), et
une poignée (43) fixée à l'attache (41) pour le fonctionnement manuel pour engager/dégager les encoches (42) avec/de l'axe (361).

4. Machine à scie à ruban selon la revendication 3, dans laquelle l'une des branches de l'attache (41) comporte un deuxième tube (44) solidement monté dessus, le deuxième tube (44) comporte des fentes disposées diamétralement (45) dans une périphérie de celui-ci, une tige de mise en prise (48) comprend une première extrémité (481) et une deuxième extrémité (482), la tige de mise en prise (48) passe dans ladite une des branches de l'attache (41) avec la première extrémité (481) au-delà de l'attache (41) pour le fonctionnement manuel et avec la deuxième extrémité (482) entre les branches de l'attache (41), un axe transversal (485) passe dans la tige de mise en prise (48), grâce à quoi lorsque l'axe transversal (485) repose sur une face d'extrémité du deuxième tube (44), la deuxième extrémité (482) de la tige de mise en prise (48) est dégagée du trou (331) de la section pivot (33), permettant ainsi à l'attache (41) de pivoter par rapport à la section pivot (33), et lorsque l'axe transversal (485) est engagé dans les fentes (45) du deuxième tube (44), la deuxième extrémité (482) de la tige de mise en prise (48) est engagée dans le trou (331) de la section pivot (33), empêchant ainsi le mouvement pivotant de l'attache (41) par rapport à la section pivot (33).

5. Machine à scie à ruban selon la revendication 4, dans laquelle un ressort (483) est attaché entre ladite une des branches de l'attache (41) et la deuxième extrémité (482) de la tige de mise en prise (48) pour forcer la deuxième extrémité (482) de la tige de mise en prise à se mettre en prise avec le trou (331) de la section pivot (33).
